# DEMANDE DE BREVET EUROPEEN

(11) **EP 4 817 415 A1**
(43) Date de publication de la demande: **07.10.2026**
(21) Numéro de dépôt: 26165557.5
(22) Date de dépôt: 17.03.2026
(51) Int. Cl.: A01M 7/00

(54) **ENGIN AVEC DEUX CUVES LATÉRALES DE LIQUIDE ET SYSTÈME D' ÉQUILIBRAGE**

(30) Priorité: 04.04.2025 FR 2503594
(71) Demandeur: Exel Industries, 51200 Epernay (FR)
(72) Inventeur: BOUCQUEMONT, Thomas, 51130 Bergères-lès-Vertus (FR)
(74) Mandataire: Bandpay & Greuter

(57) **Abrégé**

La présente invention vise un engin automoteur comprenant un système de pulvérisation qui comprend une première cuve de liquide (CVG) à gauche de l'axe longitudinal et une deuxième cuve de liquide (CVD) à droite de l'axe longitudinal, une pompe (PP) et un circuit de distribution pour délivrer du liquide de traitement sur une végétation cible (VG) via des buses de dispenses (8), un premier circuit d'aspiration (A1) à partir de la première cuve et un deuxième circuit d'aspiration (A2) à partir de la deuxième cuve, un premier circuit de retour (R1) et un deuxième circuit de retour (R2), des électrovannes (3,31,41,42) sur les circuits d'aspiration et/ou de retour, pilotée par une unité de commande (6), chaque cuve de liquide comprenant un capteur de pression (S1,S2) pour estimer la quantité de liquide, et l'unité de commande pilotant les électrovannes pour équilibrer les quantités respectives de liquide (Q1,Q2) des cuves de liquide.

## Description

### DOMAINE TECHNIQUE

La présente invention concerne généralement le domaine des engins agricoles automoteurs et autres tracteurs utilisés dans le les exploitations agricoles, notamment les exploitations viticoles ou arboricoles. Parmi ces engins, on trouve un type particulier appelé tracteur enjambeur qui permet de suivre et traiter un ou plusieurs rang(s) de végétation en prenant appui de part et d'autre du rang, le corps central de l'engin se trouvant à cheval au-dessus du rang de végétation.

Un tel tracteur enjambeur présente un centre de gravité élevé par rapport au sol et la question de sa stabilité latérale et du risque de basculement vers la droite ou vers la gauche se pose en pratique. En effet, la hauteur du centre de gravité n'est pas compensée par un élargissement de l'engin, à l'inverse, les tracteurs enjambeurs ont une voie étroite, c'est-à-dire une largeur entre les roues gauche et les roues droite, qui reste relativement petite, afin de pouvoir évoluer dans les vergers et les vignes.

D'ailleurs, le souci de la stabilité latérale des engins agricoles se pose également pour des tracteurs non-enjambeurs de largeur modeste auxquels peut s'appliquer la présente invention. Il n'est pas exclu d'appliquer la présente invention en outre à des appareils non automoteurs.

On s'intéresse en particulier ici à des tracteurs enjambeurs équipés d'un système de pulvérisation et qui portent par conséquent une ou plusieurs cuves de liquide de traitement que le système de pulvérisation est destiné à appliquer sur une végétation cible comme des ceps de vigne ou des arbustes.

Pour avoir une configuration compacte du tracteur enjambeur équipé d'un système de pulvérisation, la solution la plus pertinente pour placer le liquide de traitement est de disposer une première cuve du côté gauche de l'engin et une deuxième cuve du côté droit de l'engin. De plus, c'est une configuration qui permet de ne pas surélever encore plus le centre de gravité de l'engin chargé de liquide et même d'abaisser le centre de gravité global.

La fonction et la maniabilité requise pour un tel engin rend difficile de placer la cuve ou les cuves de liquide dans une zone de l'axe longitudinal. Placer la réserve de liquide de traitement au-dessus du corps central de l'engin conduirait à une position du centre de gravité trop élevé et donc dangereuse en pratique.

### ETAT DE LA TECHNIQUE

Si on considère un tracteur enjambeur équipé d'un système de pulvérisation avec deux cuves latérales, à savoir une cuve à droite et une cuve à gauche, lorsque ce tracteur enjambeur parcourt une parcelle de vigne ou de verger avec un dévers latéral, c'est-à-dire que le tracteur penche à gauche ou à droite, il se produit un phénomène de vases communicants qui a tendance à remplir davantage la cuve située en aval au détriment de la cuve située en amont qui se vide, ce qui déplace le centre de gravité du mauvais côté par rapport au besoin de stabilité.

Souvent, il est prévu une vanne à commande manuelle à la base de chaque cuve latérale. C'est l'opérateur qui choisit d'ouvrir une des vannes et de fermer l'autre vanne s'il souhaite qu'une seule des cuves soit en communication avec la pompe pour l'aspiration. Dans ces conditions, une des cuves se vide alors que l'autre reste à volume constant. Là aussi, lors d'un parcours en dévers, la situation peut être défavorable, c'est-à-dire que la cuve la plus vide peut se trouver du côté amont de la pente, et la cuve la plus remplie en aval, situation défavorable par rapport au besoin de stabilité.

Si les vannes à commande manuelle sont toutes deux dans un état ouvert, alors nous retrouvons le phénomène problématique des vases communicants exposé ci-dessus.

Il faut remarquer que la stabilité est recherchée non seulement pour les séquences de travail mais aussi pour les séquences de transit de l'engin (chemins, manœuvres de bout de rang, etc.).

On remarque que plus les cuves sont remplies, plus l'impact sur un déplacement éventuel du centre de gravité de l'ensemble est important.

De plus il faut considérer la stabilité de l'engin question non seulement en statique mais aussi en dynamique en prenant en compte les mouvements de liquide à l'intérieur des cuves.

C'est dans ce contexte que les inventeurs ont cherché à proposer une solution plus favorable à un équilibrage plus pertinent des quantités de liquide dans les deux cuves latérales ce qui permet de réduire les risques de chavirage ou basculement latéral.

### PRESENTATION DE L'INVENTION

Dans ce contexte, la présente invention a pour objet un engin, par exemple un engin automoteur, par exemple de type tracteur enjambeur, comprenant un système de pulvérisation, le véhicule ayant un axe longitudinal correspondant à sa direction de déplacement normale, le système de pulvérisation comprenant une première cuve de liquide de traitement située à gauche de l'axe longitudinal et une deuxième cuve de liquide de traitement située à droite de l'axe longitudinal,
le système de pulvérisation comprenant au moins une pompe et un circuit de distribution pour délivrer du liquide de traitement en direction d'une végétation cible via des buses de dispense,
le système de pulvérisation comprenant un premier circuit d'aspiration à partir de la première cuve, un deuxième circuit d'aspiration à partir de la deuxième cuve, un circuit collecteur d'aspiration en amont de la pompe, un premier circuit de retour vers la première cuve et un deuxième circuit de retour vers la deuxième cuve, un ensemble de vannes sur les circuits d'aspiration et/ou les circuits de retour, pilotées par une unité de commande.

L'engin selon l'invention est remarquable en ce que la première cuve de liquide comprend un premier capteur adapté pour permettre une estimation de la quantité de liquide présente dans la première cuve de liquide, la deuxième cuve de liquide comprend un deuxième capteur, adapté pour permettre une estimation de la quantité de liquide présente dans la deuxième cuve de liquide,
et l'unité de commande pilote des vannes de l'ensemble de vannes afin de viser une cible d'équilibrage courante entre les quantités respectives de liquide des première et deuxième cuves de liquide.

Grâce à ces dispositions, on peut ainsi modifier la répartition respective du liquide de traitement entre la cuve gauche et la cuve droite. On note que sous le vocable « cible d'équilibrage » exprimée ci-dessus, il peut s'agir d'une cible d'équilibrage neutre à savoir une quantité identique entre la cuve gauche et la cuve droite. Toutefois, la cible d'équilibrage peut être différente, en effet on peut avoir besoin, dans certaines circonstances, de placer plus de liquide dans l'une des cuves, par exemple pour améliorer la stabilité lors d'un parcours en dévers de l'engin agricole.

**Il** faut aussi remarquer que la cible d'équilibrage courante peut varier au cours du temps, en fonction des circonstances d'utilisation de l'engin agricole.

Selon une solution simple, la cible d'équilibrage correspond tout le temps à un centrage c'est-à-dire une égalité des quantités à droite et à gauche.

Concernant la circuiterie d'aspiration, comme le liquide est contenu dans deux cuves distinctes, il est prévu deux circuits d'aspiration qui se rejoignent dans un circuit commun appelé collecteur d'aspiration lequel convoie le liquide jusqu'à la pompe. Il peut être prévu sur cette circuiterie une ou plusieurs vannes commandées, voire un ou plusieurs clapet(s) anti-retour.

Concernant le terme 'vanne' il couvre ici généralement une vanne qui peut être commandée à distance c'est-à-dire soit une vanne à commande électrique soit une vanne à commande pneumatique. Cela n'exclut pas qu'il y ait en outre une commande manuelle supplémentaire locale qui a priorité sur la commande à distance lorsqu'elle est sollicitée.

Les capteurs de pression renseignent en permanence sur le niveau de liquide dans chacune des cuves. Pour chaque capteur, la pression hydrostatique qui règne en bas de cuve est mesurée et utilisée pour déterminer la hauteur de liquide au-dessus du capteur, et par conséquent pour déterminer la quantité de liquide présent dans la cuve comme il sera vu plus loin.

L'unité de commande utilise les informations en provenance des capteurs de pression pour réaliser une boucle d'asservissement en pilotant des vannes commandées sur les circuits de retour afin de viser, voire d'atteindre la cible d'équilibrage qui prévaut à l'instant t.

Concernant le capteur placé dans chaque cuve, il peut s'agir de préférence de capteurs de pression comme il sera discuté plus loin. Toutefois, d'autres types de capteurs peuvent être utilisés pour estimer la quantité de liquide présente dans une cuve : par exemple un capteur de type jauge à flotteur, une jauge de type capacitive, un capteur de type à ondes ultrasonores rebondissant à la surface du liquide, etc.

Selon une réalisation, le premier circuit de retour et le deuxième circuit de retour contribuent d'une part à la fonction d'agitation du contenu des cuves et d'autre part à viser la cible d'équilibrage courante entre les quantités respectives de liquide dans les cuves.

Moyennant quoi on utilise en synergie les circuits de retour, pour les deux fonctions mentionnées ; on rajoute juste le cas échéant des vannes commandées sur les circuits de retour pour réaliser la fonction d'équilibrage des volumes de liquide.

Dit autrement, la fonction d'équilibrage des volumes dans les cuves ne nécessite pas d'installer des tuyaux supplémentaires.

Pour rappel, la fonction d'agitation consiste à mélanger le liquide de traitement, grâce à un jet de liquide en retour dans la cuve, pour en assurer une bonne homogénéité et éviter une possible ségrégation de ses composantes.

Selon une réalisation possible, il n'est pas exclu d'utiliser des tuyauteries spécifiques pour la fonction équilibrage des volumes/quantités.

Selon une réalisation, le système de pulvérisation comprend une pompe unique servant d'une part à la fonction de distribution vers les buses, d'autre part à la fonction d'agitation du contenu des cuves et encore d'autre part à viser la cible d'équilibrage courante entre les quantités respectives dans les cuves.

Dit autrement, la fonction d'équilibrage des volumes dans les cuves ne nécessite pas d'installer une pompe supplémentaire. C'est la pompe de distribution unique qui est mise à contribution, simultanément ou non, avec une pulvérisation effective via les buses sur la végétation cible.

Selon une réalisation, l'ensemble de vannes peut comprendre deux vannes, de préférence deux électrovannes, sur les circuits de retour, et de préférence une seule vanne, de préférence une seule électrovanne, sur un des deux circuits d'aspiration.

En pratique, une première électrovanne est agencée sur le premier circuit de retour et une deuxième électrovanne est agencée sur le deuxième circuit de retour.

Grâce aux deux électrovannes présentes sur les circuits de retour, il est possible de sélectionner le retour vers l'une des cuves sans retour vers l'autre cuve (ou inversement) en fonction du besoin d'équilibrage pour viser la cible d'équilibrage courante du moment.

L'électrovanne présente sur l'un des circuits d'aspiration permet de gérer la fin de campagne, c'est-à-dire la situation où il ne reste plus beaucoup de liquide et l'on veut d'abord terminer une cuve avec report du volume restant sur l'autre cuve puis terminer finalement avec l'autre cuve. On remarque que du point de vue de la stabilité de l'engin, la séquence de fin de campagne n'a que peu d'influence car la quantité de liquide résiduelle est alors très faible et son influence sur la position du centre de gravité devient négligeable.

On remarque qu'en lieu et place d'électrovannes, on peut utiliser des vannes à commande pneumatique.

Selon une réalisation, le premier capteur de pression et le deuxième capteur sont des capteurs de pression, et l'unité de commande utilise pour chaque cuve un abaque de correspondance entre pression mesurée et volume contenu dans la cuve, cet abaque étant spécifique à chaque géométrie de cuve.

L'utilisation d'un abaque permet de prendre en compte des géométries pas forcément simples des cuves de liquide, en effet, le taux de remplissage n'est pas en général directement proportionnel à la pression mesurée par le capteur en bas de cuve.

Selon une réalisation, il peut être prévu en outre un capteur inclinomètre configuré pour délivrer une inclinaison courante par rapport à la verticale, notamment une inclinaison transversale.

Moyennant quoi, la cible d'équilibrage courante peut être déterminée en fonction de l'inclinaison latérale (i.e. transversale) de l'engin portant le système de pulvérisation. Ceci permet de réaliser si nécessaire un ajustement dynamique de la cible d'équilibrage.

Selon une réalisation, chacune des cuves présente une capacité d'au moins 250 litres. Souvent, chacune des cuves présentera une capacité d'au moins 300 ou même plus.

Ces volumes représentent un poids conséquent qui peut avoir un effet non négligeable sur l'équilibre si les cuves ne sont pas bien équilibrées, et cela peut décaler latéralement de manière significative la position du centre de gravité global de l'engin.

Selon une réalisation, le système de pulvérisation peut comprendre en outre un circuit de rinçage auquel cas il est prévu une vanne à 3 voies sur le circuit collecteur d'aspiration. Un tel circuit de rinçage est compatible avec le schéma hydraulique permettant la fonction d'équilibrage des cuves exposé ci-dessus.

Selon une réalisation, le système de pulvérisation peut comprendre en outre un ou plusieurs filtres. La présence de filtres (de fonction connue en soi) est compatible avec le schéma hydraulique permettant la fonction d'équilibrage des cuves exposé ci-dessus.

Selon une réalisation, le système de pulvérisation peut comprendre en outre un circuit de recirculation. Le circuit de recirculation fait recirculer le liquide depuis l'ensemble de traitement vers le circuit collecteur d'aspiration. Le débit de la pompe est dirigé principalement vers le circuit de distribution et de recirculation mais accessoirement une partie du débit de la pompe en excès est dirigée vers les circuits de retour pour la fonction équilibrage des réservoirs / des cuves.

Selon une réalisation, il peut être prévu en outre un dispositif d'affichage pour afficher les quantités présentes dans les cuves. Moyennant quoi, l'opérateur de l'engin on peut connaître en permanence le niveau de remplissage dans chacune des cuves latérales. Ledit opérateur peut le cas échéant adapter le parcours de l'engin en fonction des quantités respectives dans les cuves latérales.

Selon un autre aspect de l'invention, celle-ci a trait à un procédé pour équilibrer des quantités de liquide contenues respectivement dans une première cuve de liquide et une deuxième cuve de liquide, les cuves étant portées par un engin agricole, les cuves étant installées latéralement respectivement à gauche et à droite d'un axe longitudinal de l' engin agricole, les cuves faisant partie d'un système de pulvérisation comprenant une pompe et un premier circuit de retour vers la première cuve et un deuxième circuit de retour vers la deuxième cuve, avec une vanne, de préférence une électrovanne, sur chacun des circuits de retour, le procédé comprenant :
- mesurer une première pression dans la première cuve de liquide grâce à un premier capteur, et en déduire une première quantité de liquide,
- mesurer une deuxième pression dans la deuxième cuve de liquide grâce à un deuxième capteur, et en déduire une deuxième quantité de liquide,
- déterminer une cible d'équilibrage courante entre les quantités respectives de liquide dans les première et deuxième cuves de liquide,
- faire tourner la pompe de circulation de liquide,
- ouvrir l'un des circuits de retour et fermer l'autre circuit de retour afin de faire augmenter le volume de liquide dans l'une des cuves et de faire diminuer le volume de liquide dans l'autre des cuves.

Selon une réalisation, le procédé prévoit d'utiliser pour chaque cuve un abaque de correspondance entre pression mesurée et volume contenu dans la cuve, cet abaque étant spécifique à chaque géométrie de cuve, afin de déterminer le volume de liquide contenu dans la cuve.

Selon une réalisation, la cible d'équilibrage courante est déterminée en fonction d'une valeur d'inclinaison latérale délivrée par un capteur inclinomètre.

Selon une réalisation, il est prévu un affichage des quantités présentes dans chacune des cuves.

Concernant la fonction agitation, il peut arriver que dans certains modes opératoires la fonction agitation conduit à s'éloigner sur de la cible d'équilibrage, mais la séquence d'agitation est complétée ensuite par une séquence de rééquilibrage.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 montre un schéma fonctionnel d'un exemple de système de pulvérisation avec une fonction d'équilibrage selon un mode de réalisation de la présente invention ;
La figure 2 montre une vue de dessus schématique d'un engin de type tracteur enjambeur équipé du système de pulvérisation représenté à la figure 1 ;
La figure 3 montre une vue de face schématique d'un engin de type tracteur enjambeur équipé du système de pulvérisation représenté à la figure 1 :
La figure 4 montre une vue de profil schématique d'un engin de type tracteur enjambeur équipé du système de pulvérisation représenté à la figure 1 ;
La figure 5 représente un schéma en coupe transversale illustrant la position du centre de gravité dans un plan transversal ;
La figure 6 montre un exemple de schéma de commande fonctionnel ;
La figure 7 représente en vue de dessus un schéma de parcours avec allers-retours sur un terrain incliné, le parcours étant réalisé en travers de la pente du terrain ;
La figure 8 représente un schéma en coupe transversale d'un engin automoteur enjambeur parcourant un trajet en dévers latéral ;
La figure 9 montre un diagramme de type abaque qui relie la pression perçue par le capteur de pression à la quantité de liquide présent dans la cuve ;
La figure 10 montre un schéma fonctionnel simplifié selon un premier exemple de circuit hydraulique ;
La figure 11 montre un schéma fonctionnel simplifié selon un deuxième exemple de circuit hydraulique ;
La figure 12 montre un schéma fonctionnel simplifié selon un troisième exemple de circuit hydraulique, avec retour de liquide vers la première cuve ;
La figure 13 montre un schéma fonctionnel simplifié selon un troisième exemple de circuit hydraulique, avec retour de liquide vers la deuxième cuve.

Il faut noter que les figures exposent l'invention de manière détaillée pour permettre de mettre en œuvre l'invention ; bien que non limitatives, lesdites figures servent notamment à mieux définir l'invention le cas échéant.

### DESCRIPTION DETAILLEE DE L'INVENTION

L'invention concerne un engin agricole **100.** L'engin est de préférence automoteur mais il n'est pas exclu d'appliquer la présente invention à un appareil traîné. Les caractéristiques de l'invention sont présentées dans la suite dans le cas particulier d'un tracteur de type enjambeur.

S'agissant du repérage dans l'espace, la direction **X** correspond à la direction longitudinale de l'engin, e.g. sa direction de déplacement normale, la direction **Z** correspond à la direction verticale et la direction **Y** perpendiculaire aux deux précédentes et correspond à la direction transversale de l'engin.

On s'intéresse en particulier à des tracteurs équipés d'un système de pulvérisation de produit sous forme liquide, le produit étant destiné à être projeté sous forme de gouttelettes sur une végétation cible **VG** par exemple des feuillages d'arbuste ou des feuillages de vignoble. La végétation cible peut typiquement être un vignoble ou un verger, sans que ceci constitue une limitation aux cas d'applications possibles de la présente invention.

Le tracteur enjambeur comprend un châssis structurel **5** généralement de forme rectangulaire, vu dans un plan horizontal. La longueur selon l'axe longitudinal X est substantiellement plus importante que la largeur selon l'axe transversal Y, car comme déjà évoqué dans la partie introductive la largeur du tracteur enjambeur doit rester limitée.

Le châssis embarque au moins une unité de motorisation, un poste de conduite, un groupe hydraulique et/ou un groupe pneumatique, divers systèmes de commande dont certains seront discutés en détail plus loin.

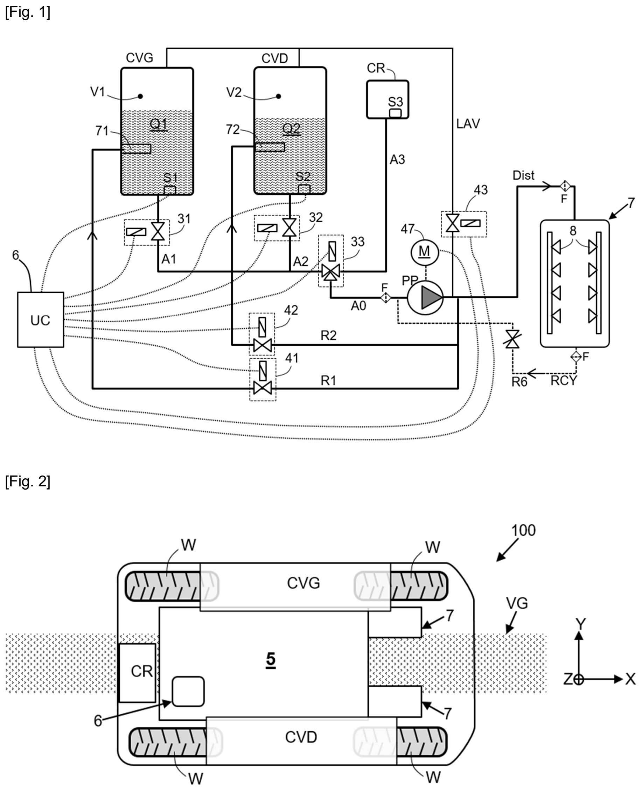

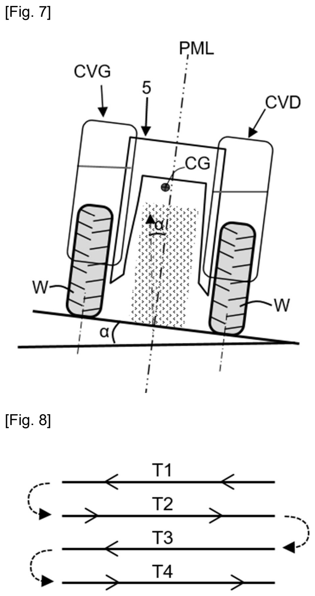

À partir des zones latérales du châssis s'étendent vers le bas quatre jambes de force, deux à droite et deux à gauche. À l'extrémité basse de chaque jambe de force est agencé une roue **W,** comme représenté notamment sur les figures 2 et 7. Les quatre roues peuvent être motrices ou seulement deux roues peuvent être motrices. Les roues avant et/ou les roues arrière peuvent être également directrices. La structure, les caractéristiques et les fonctions d'un tracteur enjambeur sont supposées généralement connues et donc non décrite plus en détail ici.

On note qu'il n'est pas exclu d'appliquer la présente invention à un enjambeur monté sur chenilles.

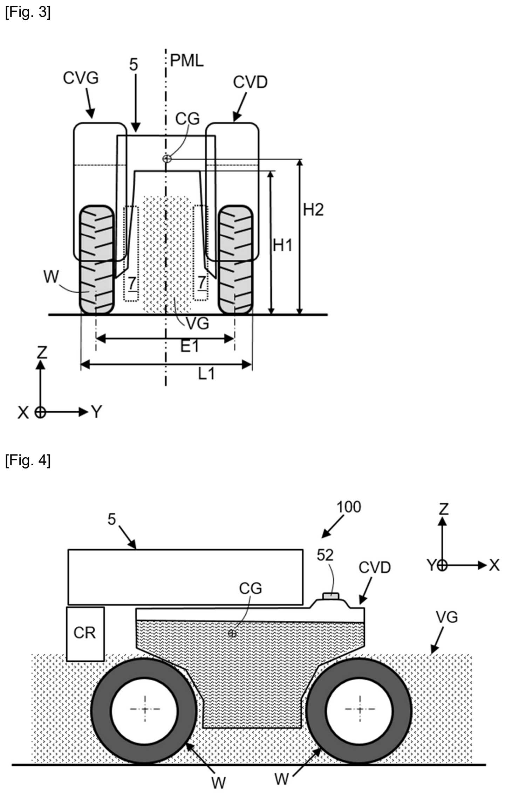

Selon un point d'attention particulier, le tracteur enjambeur dans sa zone centrale doit présenter une garde au sol importante pour que le tracteur enjambeur passe au-dessus de la végétation du rang de végétation cible **VG.** Comme illustré à la figure 3, cette garde au sol **H1** est d'au moins 1 mètre, elle peut être comprise dans la pratique entre 1m et 1m50. Cette contrainte a pour conséquence une position élevée du centre de gravité **CG** du tracteur enjambeur. En pratique la hauteur **H2** du centre de gravité **CG** est voisine de la garde au sol susmentionnée. Donc **H2** > 1 m, voire **H2** > 1,25 m. Il faut bien noter que les valeurs données ci-avant ne sont pas des valeurs limitatives.

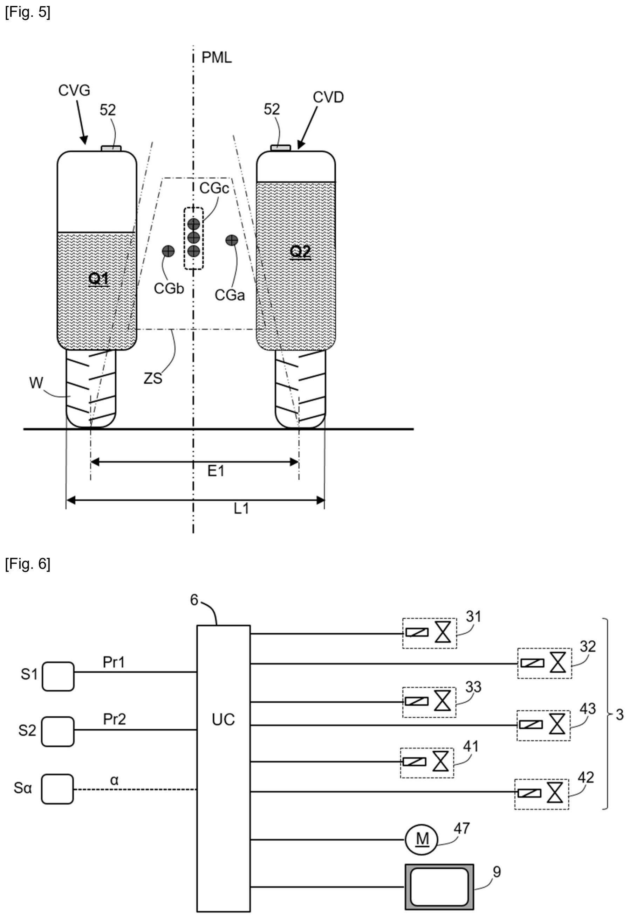

Comme visible aux figures 3 et 5, l'engin agricole illustré ici présentent une largeur hors-tout notée **L1** et une voie **E1** à savoir la distance qui sépare l'axe médian de chacune des roues gauche et droite **W.** Suivant diverses configurations, la référence de la largeur hors-tout peut s'appuyer sur les faces extérieures des roues comme illustré ou bien s'appuyer sur les faces extérieures des cuves. La largeur **L1** peut être comprise entre 1,2 m et 1,6m.

On note que le tracteur enjambeur considéré ici ne comporte pas de système de compensation de dévers.

Il faut aussi remarquer que, outre un possible déplacement latéral du centre de gravité de l'engin chargé de liquide, il faut aussi prendre en compte les effets dynamiques des déplacements de volumes de liquide dans les cuves, qui engendre des forces dynamiques qui se rajoutent dans la considération de stabilité.

L'engin agricole **100** peut être équipé en outre d'un capteur inclinomètre **Sα**. Ce capteur inclinomètre **Sα** délivre notamment une information de l'inclinaison latérale courante de l'engin dont l'utilité sera vue plus loin. Le capteur inclinomètre peut être mono-axe ou bi-axe.

### Système de pulvérisation

Selon diverses réalisations, le système de pulvérisation comprend au moins un ensemble de traitement 7, comprenant dans l'exemple illustré deux rampes de buses 8. Le produit est dispensé sous forme de fines gouttelettes vers le feuillage de la végétation cible, de part et d'autre du rang de végétation, comme connu en soi.

Comme c'est visible notamment sur les figures 2 et 7, le système de pulvérisation comprend deux cuves latérales : une première cuve de liquide (notée CVG) de traitement est située à gauche de l'axe longitudinal **X** et une deuxième cuve de liquide de traitement (notée CVD) est située à droite de l'axe longitudinal.

Comme notamment visible à la figure 4, la cuve latérale gauche **CVG** est généralement interposée entre la roue avant gauche et la roue arrière gauche de l'engin. De même, la cuve latérale droite **CVD** est généralement interposée entre la roue avant droite et la roue arrière droite de l'engin. Cette disposition contribue à diminuer un peu la hauteur du centre de gravité de l'engin chargé en liquide puisqu'une partie importante du liquide contenu dans la cuve (et notamment la partie inférieure) se trouve en dessous du centre de gravité de l'engin non chargé de liquide.

Les cuves peuvent être identiques, disposées généralement en miroir l'une de l'autre par rapport à un plan médian longitudinal **PML** de l'engin. Selon une variante, les cuves peuvent être différenciées, par exemple d'un côté une d'elles peut présenter un volume plus faible pour laisser la place à une cuve de rinçage, ou à un autre équipement de l'engin.

On remarque que les cuves ne sont pas pressurisées. Il est prévu un dispositif pour le remplissage de la cuve (connu en soi). Il est prévu un bouchon supérieur **52.** Lorsque le bouchon **52** est en place, il laisse entrer l'air pour les modes d'utilisation, afin que la pression d'air à l'intérieur des cuves soit toujours substantiellement celle de la pression atmosphérique.

Le système de pulvérisation comprend une pompe **PP,** et un circuit de distribution repéré **Dist** pour délivrer du liquide de traitement en direction des buses de dispense 8. Il peut être prévu sur le circuit de distribution une ou plusieurs vannes de sélection de préférence des électrovannes commandées par une unité de commande **10.**

La pompe **PP** est dimensionnée pour délivrer plus de débit que celui nécessaire à la pulvérisation ce qui autorise les fonctions d'agitation et de retour de liquide qui seront discutées aux paragraphes suivants, simultanément ou non.

La pompe est entraînée par un moteur **47** qui peut être soit électrique soit hydraulique suivant la typologie du système de pulvérisation.

Le moteur de la pompe peut être commandé en mode tout ou rien, ou alternativement il peut être commandé avec plusieurs vitesses c'est-à-dire plusieurs régimes graduels possibles.

Par ailleurs, le système de pulvérisation comprend généralement plusieurs filtres repérés **F** à la figure 1, non décrits en détails car connus.

Selon une solution particulièrement astucieuse, le système de pulvérisation comprend une seule pompe qui réalise une pluralité de fonctions à savoir distribution, retour pour agitation et retour pour équilibrage des cuves (fonction qui va être discutée dans les détails plus loin).

Le système de pulvérisation comprend une cuve de rinçage **CR,** qui contient généralement de l'eau, d'une capacité de plusieurs dizaines de litres pour pouvoir rincer les cuves et les circuits de pulvérisation notamment en fin de campagne et de pulvérisation. La position de la cuve de rinçage peut être quelconque au sens de la présente invention. Il n'est pas exclu que la cuve de rinçage comporte un capteur de remplissage pour indiquer à l'unité de commande sa contribution à la position du centre de gravité globale de l'engin agricole

La première cuve est équipée d'un premier capteur **S1.** Dans l'exemple présenté, ce capteur mesure la pression hydrostatique. Ce capteur est agencé à l'intérieur de la cuve, dans la zone basse de la cuve, de préférence au voisinage du point le plus bas. Ce capteur **S1** délivre une valeur de pression par exemple représentative de la pression en millibars régnant à l'endroit de sa position.

Comme illustré à la figure 6, le premier capteur **S1** est relié à l'unité de commande **6.** Le premier capteur **S1** délivre une valeur de pression **Pr1.**

Par ailleurs, la deuxième cuve est aussi équipée d'un capteur de pression **S2,** identique ou similaire à celui décrit pour la première cuve ci-dessus.

Comme illustré à la figure 6, le deuxième capteur **S2** est relié à l'unité de commande **6.** Le deuxième capteur **S2** délivre une valeur de pression **Pr2.**

La cuve de rinçage **CR** peut comprendre aussi un capteur de pression **S3.**

Pour rappel, comme déjà indiqué dans la partie introductive, l'estimation de la quantité présente dans la cuve pourrait être réalisée à l'aide d'un capteur de notre type technologique.

L'unité de commande **6** utilise pour chaque cuve un abaque de correspondance **4** entre pression mesurée et quantité de liquide contenu dans la cuve, afin de pouvoir estimer la quantité de liquide présente dans la cuve.

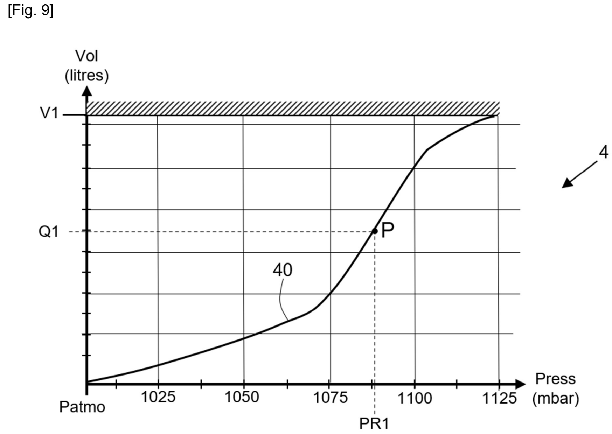

Un exemple d'un tel abaque est illustré à la figure 9. Cet abaque est de préférence spécifique à chaque géométrie de cuve. Si la section horizontale de la cuve est constante sur toute la hauteur, alors la courbe est une droite mais en réalité et notamment dans le cas du tracteur enjambeur, la section horizontale de la cuve varie entre le bas de la cuve et le haut de la cuve, d'où la non-linéarité de la courbe illustrée **40.** On a illustré une mesure de pression **PR1,** qui après report sur l'abaque donne la quantité **Q1.**

En parallèle de l'abaque présenté ci-dessus, l'unité de commande peut avoir comme paramètre la densité moyenne du liquide, afin de corriger la transformation entre la pression hydrostatique et la quantité de liquide estimée et donner des informations de quantité en litres ou en kilogrammes. La densité moyenne du liquide peut être comprise entre 1 et 1,3.

L'abaque présenté peut présenter par quelques points de passage reliés par des segments de droite, auquel cas on utilise une interpolation linéaire entre les points de passage connus pour déterminer la quantité de liquide présent à partir d'une valeur de pression lue.

Le volume disponible dans la première cuve est noté **V1.** La quantité de liquide contenue dans la première cuve est notée **Q1.**

Le volume disponible dans la deuxième cuve est noté **V2.** La quantité de liquide contenue dans la deuxième cuve est notée **Q2.**

Les quantités **Q1** et **Q2** sont des grandeurs éminemment variables alors que le volume disponible **(V1** ou **V2)** qui correspond à la capacité de chaque cuve est un paramètre fixe.

Le système de pulvérisation comprend premier circuit d'aspiration **A1,** pour alimenter la pompe **PP** à partir de la première cuve, et un deuxième circuit d'aspiration **A2** pour alimenter la pompe PP à partir de la deuxième cuve.

Les premier et deuxième circuits d'aspiration **A1,A2** sont prolongés par un tronc commun autrement appelé un circuit collecteur d'aspiration **A0** qui forme la branche commune en amont de la pompe. On note qu'il n'est pas exclu d'avoir recours à une pompe à deux entrées auquel cas le circuit collecteur, alors très petit, se trouve à l'intérieur de la pompe.

Le système de pulvérisation comprend un premier circuit de retour **R1** et un deuxième circuit de retour **R2.** Le premier circuit de retour **R1** convoie du liquide depuis la sortie de la pompe **PP** jusqu'à la première cuve **CVG.** Dans l'exemple illustré, le retour de liquide arrive sur un organe d'agitation **71** de la fonction agitation. Le deuxième circuit de retour **R1** convoie du liquide depuis la sortie de la pompe **PP** jusqu'à la deuxième cuve **CVD.** Dans l'exemple illustré, le retour de liquide arrive sur un organe d'agitation **72** de la fonction agitation. La fonction agitation peut être activée de manière intermittente ou peut être activée en permanence. Il peut être prévu une électrovanne par cuve (non représentée) pour diriger le retour dans l'organe d'agitation ou directement dans la cuve sans passer par l'organe d'agitation.

Le système de pulvérisation comprend un ensemble d'électrovannes **3.** Comme déjà indiqué, bien que l'on ait illustré des électrovannes, c'est-à-dire des vannes à commande électrique, on pourrait en alternative utiliser des vannes à commande pneumatique.

Dans l'exemple illustré aux figures 1,10,12 et 13, une première électrovanne de retour **41** contrôle le passage du liquide dans le premier circuit de retour **R1,** une deuxième électrovanne de retour **42** contrôle le passage du liquide dans le deuxième circuit de retour **R2.** De plus, une première électrovanne de sélection d'aspiration **31** contrôle le passage du liquide dans premier circuit d'aspiration **A1,** et une deuxième électrovanne de sélection d'aspiration **32** contrôle le passage du liquide dans deuxième circuit d'aspiration **A2.**

Optionnellement, il est prévu un circuit de recyclage **R6,** d'acronyme **'RCY',** connu en soi donc non décrit ici.

Optionnellement, il est prévu en outre un circuit de rinçage **LAV.** Dans ce cas, il est prévu une vanne **33** à 3 voies sur le circuit collecteur d'aspiration, et une vanne **43** pour laisser circuler le liquide en sortie de pompe vers le circuit de rinçage et lavage.

La vanne **33** à 3 voies peut être une vanne à commande manuelle. Selon une autre réalisation, cette vanne peut être une vanne commandée électriquement ou pneumatiquement.

En mode de fonctionnement normal de pulvérisation, la vanne 3 voies **33** met en communication l'aspiration de la pompe **PP** avec le circuit collecteur d'aspiration **A0** (tronc commun aspiration liquide de traitement) et la vanne de retour de rinçage **43** est fermée. Dans le mode de fonctionnement particulier du rinçage, alors la vanne 3 voies **33** met en communication l'aspiration de la pompe avec la cuve de rinçage **CR** et la vanne de retour de rinçage **43** est ouverte.

En se tournant maintenant vers la figure 5, on a représenté plusieurs positions du centre de gravité **CG** de l'ensemble de l'engin agricole avec son chargement de liquide de traitement.

Lorsque les deux cuves comprennent substantiellement la même quantité de liquide, alors le centre de gravité de l'engin se trouve au voisinage du plan médian longitudinal selon des positions **CGc** qui évoluent au cours du vidage des cuves.

Lorsque la deuxième cuve **CVD** située à droite est substantiellement plus remplie que la première cuve **CVG,** alors le centre de gravité globale est décalé à droite, c'est le point noté **CGa.**

**A** l'inverse, lorsque la deuxième cuve **CVD** située à droite est substantiellement moins remplie que la première cuve **CVG,** alors le centre de gravité globale est décalé à gauche, c'est le point noté **CGb.**

On a aussi représenté une zone en trait mixte **ZS** à la figure 5 qui a une forme de trapèze et qui représente l'ensemble des lieux de positions du centre de gravité qui confère une stabilité satisfaisante selon un critère donné. Le critère peut être de pouvoir circuler sur un sol en dévers jusqu'à une inclinaison de 15%.

Comme visible à la figure 6, le système de pulvérisation peut être associé à un dispositif d'affichage **9** qui permet d'afficher les quantités de liquide **Q1,Q2** présentes dans chacune des cuves latérales.

Avantageusement selon la présente invention, l'unité de commande **6** pilote les électrovannes afin de viser une cible d'équilibrage courante entre les quantités respectives de liquide **Q1,Q2** des première et deuxième cuves de liquide. La cible d'équilibrage peut être neutre (quantités égales), elle peut être fixe ou non, elle peut varier en fonction des conditions opérationnelles.

Selon une option, la cible d'équilibrage courante est déterminée en fonction d'une valeur d'inclinaison latérale délivrée par le capteur inclinomètre **Sα.**

Comme illustré sur la figure 8, le tracteur enjambeur peut se trouver sur une parcelle en pente avec un parcours en travers de la pente. Dans le cas illustré, lorsque le tracteur parcourt les tronçons **T1** et **T3,** il penche vers la gauche et lorsque le tracteur parcourt les tronçons **T2** et **T4** il penche vers la droite, la cible d'équilibrage peut ainsi être réajustée à chaque manœuvre de demi-tour.

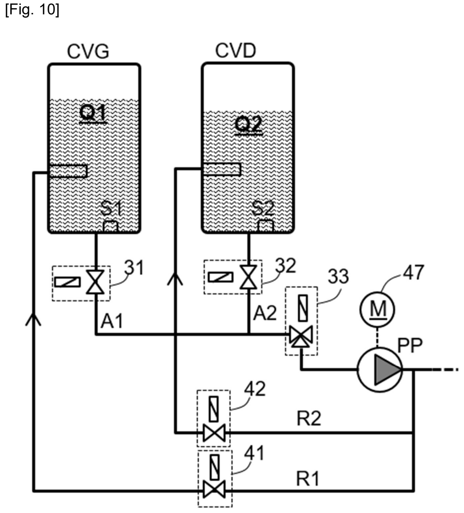

Selon un premier mode de réalisation de l'ensemble d'électrovannes illustré à la figure 10, il est prévu une électrovanne **31** sur le circuit d'aspiration **A1** qui va de la première cuve vers la pompe et une électrovanne **32** sur le circuit d'aspiration **A2** qui va de la deuxième cuve vers la pompe.

En outre, il est prévu une électrovanne **41** sur le circuit de retour **R1** en direction de la première cuve **CVG** et une autre électrovanne **42** sur le circuit de retour **R2** en direction de la deuxième cuve **CVD.**

Avec une telle configuration à quatre électrovannes, l'unité de commande **6** dispose d'une souplesse totale, à savoir il peut sélectionner l'une des électrovannes sur l'un des circuits d'aspiration pour sélectionner la cuve qui va être sollicitée par le pompage. Par ailleurs l'unité de commande **6** peut ouvrir l'une des électrovannes sur les circuits de retour pour diriger le retour d'équilibrage vers la cuve qui doit être remplie davantage.

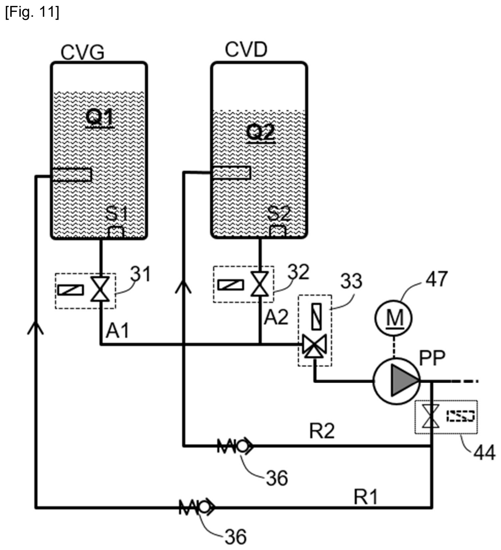

Selon un deuxième mode de réalisation de l'ensemble des électrovannes illustré à la figure 11, il est prévu un clapet anti-retour **36** sur chacun des circuits retour en lieu et place des électrovannes. Sur les circuits d'aspiration on retrouve comme précédemment une électrovanne **31** sur le circuit d'aspiration **A1** et une électrovanne **32** sur le circuit d'aspiration **A2.** De préférence, on agence une électrovanne d'arrêt **44** sur le tronc commun de retour afin de pouvoir commander sélectivement le flux de retour de liquide dans les deux circuits de retour **R1,R2.**

Dans cette configuration, il est aussi possible de réaliser la fonction d'équilibrage en puisant dans la cuve qui doit être vidée davantage, le retour se faisant dans les 2 cuves ce qui procure un bilan positif pour la cuve qui n'est pas ouverte à l'aspiration. Bien entendu on en profite pour réaliser l'agitation dans les deux cuves dans ce cas de figure.

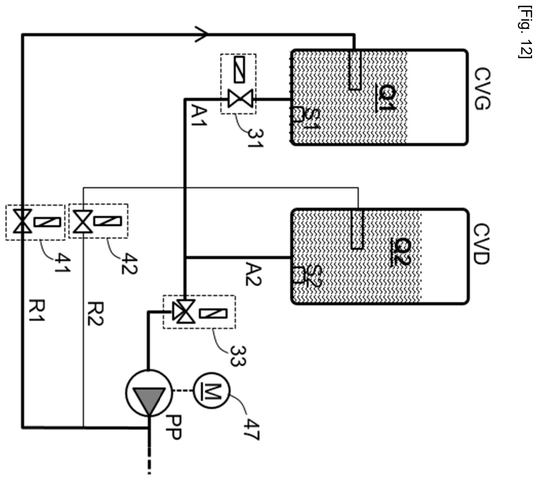

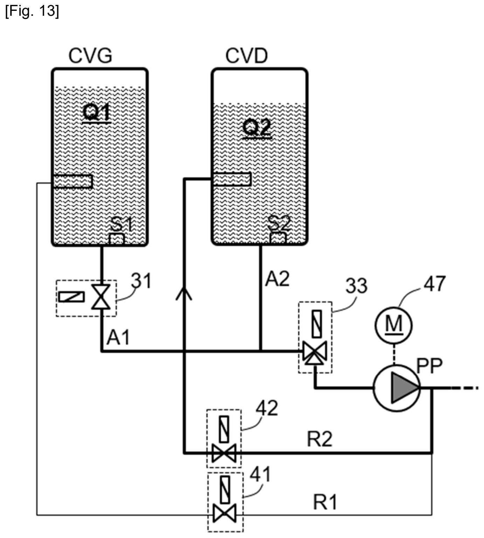

Selon un troisième mode de réalisation de l'ensemble des électrovannes illustré aux figures 12 et 13, on retrouve la disposition de deux électrovannes commandées respectives 41,42 sur les circuits de retour. Le retour vers les cuves peut donc être pratiqué avec une sélectivité optimale en commandant une seule des électrovannes ou les deux électrovannes ensemble.

On remarque que du côté des circuits d'aspiration, un seul comporte une électrovanne 31, l'autre étant toujours passant, dépourvu d'électrovanne.

Lorsque l'électrovanne **31** du premier circuit d'aspiration **A1** est commandée à l'état passant, alors la pompe aspire le liquide de traitement depuis les deux cuves simultanément.

Lorsque l'électrovanne **31** du premier circuit d'aspiration **A1** est commandée à l'état bloqué, alors la pompe aspire le liquide de traitement seulement depuis la deuxième cuve.

Pour réaliser la fonction d'équilibrage même lorsque l'électrovanne **31** du premier circuit d'aspiration est fermée, il est possible de contribuer à la fonction équilibrage. En effet, si seulement le premier circuit de retour **R1** est ouvert **(41** passante) alors on vide la deuxième cuve et on remplit la première cuve **(Q2** diminue et **Q1** augmente).

A l'inverse, si seulement le deuxième circuit de retour **R2** est ouvert **(42** passante) alors on vide la deuxième cuve et le niveau reste constant dans la première cuve, on remplit la première **(Q2** baisse et **Q1** reste constant). La baisse de quantité dans la deuxième cuve est conditionnée par la quantité de liquide dispensé vers la végétation par l'ensemble de traitement **7.** En vue de rééquilibrer si nécessaire, il peut être prévu d'ouvrir l'électrovanne **31** du premier circuit et d'ouvrir seulement l'électrovanne **42** du le deuxième circuit de retour, en faisant tourner la pompe PP, même si le circuit de distribution n'est pas ouvert. Ainsi la portion de liquide qui est aspirée à partir de la première cuve est renvoyée vers la deuxième cuve **(Q1** diminue et **Q2** augmente).

Les électrovannes de l'ensemble des électrovannes peuvent être des électrovannes tout ou rien sans exclure toutefois d'utiliser des électrovannes proportionnelles.

On notera par ailleurs que l'invention n'est pas limitée aux modes de réalisations décrits précédemment. Il apparaîtra en effet à l'homme du métier que diverses modifications peuvent être apportées aux modes de réalisations décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en œuvre de l'enseignement qui vient de lui être divulgué.

## Revendications

1. Engin, par exemple de type tracteur enjambeur, comprenant un système de pulvérisation, le véhicule ayant un axe longitudinal correspondant à sa direction de déplacement normale, le système de pulvérisation comprenant une première cuve de liquide (CVG) de traitement situé à gauche de l'axe longitudinal et une deuxième cuve de liquide de traitement (CVD) situé à droite de l'axe longitudinal,
le système de pulvérisation comprenant au moins une pompe (PP) et un circuit de distribution (Dist) pour délivrer du liquide de traitement en direction d'une végétation cible (VG) via des buses de dispense (8),
le système de pulvérisation comprenant un premier circuit d'aspiration (A1) à partir de la première cuve, un deuxième circuit d'aspiration (A2) à partir de la deuxième cuve, un circuit collecteur d'aspiration (A0) en amont de la pompe, un premier circuit de retour (R1) vers la première cuve et un deuxième circuit de retour (R2) vers la deuxième cuve, un ensemble de vannes (3,31,41,42) sur les circuits d'aspiration et les circuits de retour, pilotées par une unité de commande (6),
**caractérisé en ce que** la première cuve de liquide (CVG) comprend un premier capteur (S1) adapté pour permettre une estimation de la quantité de liquide présente dans la première cuve de liquide, la deuxième cuve de liquide (CVD) comprend un deuxième capteur (S2), adapté pour permettre une estimation de la quantité de liquide présente dans la deuxième cuve de liquide, et l'unité de commande (6) est configurée pour piloter des vannes de l'ensemble de vannes afin de viser une cible d'équilibrage courante entre les quantités respectives de liquide (Q1,Q2) des première et deuxième cuves de liquide.

2. Engin selon la revendication 1, dans lequel le premier circuit de retour (R1) et le deuxième circuit de retour (R2) contribuent d'une part à la fonction agitation du contenu des cuves et d'autre part à viser la cible d'équilibrage courante entre les quantités respectives (Q1,Q2) de liquide dans les cuves.

3. Engin selon l'une des revendications 1 à 2, dans lequel le système de pulvérisation comprend une pompe unique (PP) servant d'une part à la fonction de distribution vers les buses, d'autre part à la fonction agitation du contenu des cuves et encore d'autre part à viser la cible d'équilibrage courante entre les quantités respectives dans les cuves.

4. Engin selon l'une des revendications 1 à 3, dans lequel l'ensemble de vannes comprend deux vannes (41,42), de préférence deux électrovannes, sur les circuits de retour, et de préférence une seule vanne (31), de préférence une seule électrovanne, sur un des deux circuits d'aspiration (A1,A2).

5. Engin selon l'une des revendications 1 à 4, dans lequel le premier capteur (S1) et le deuxième capteur (S2) sont des capteurs de pression, et l'unité de commande utilise pour chaque cuve un abaque de correspondance (4) entre pression mesurée et volume contenu dans la cuve, cet abaque étant spécifique à chaque géométrie de cuve.

6. Engin selon l'une des revendications 1 à 5, comprenant en outre un capteur inclinomètre (Sα) configuré pour délivrer une inclinaison courante par rapport à la verticale notamment une inclinaison transversale (α).

7. Engin selon l'une des revendications 1 à 6, dans lequel chacune des cuves présente une capacité d'au moins 250 litres, de préférence d'au moins 300 litres.

8. Procédé pour équilibrer des quantités de liquide contenues respectivement dans une première cuve de liquide (CVG) et une deuxième cuve de liquide (CVD), les cuves étant portées par un engin agricole, les cuves étant installées latéralement respectivement à gauche et à droite d'un axe longitudinal (X) de l'engin agricole, les cuves faisant partie d'un système de pulvérisation comprenant une pompe et un premier circuit de retour (R1) vers la première cuve et un deuxième circuit de retour (R2) vers la deuxième cuve, avec une vanne, de préférence une électrovanne, sur chacun des circuits de retour, le procédé comprenant :
- mesurer une première pression dans la première cuve de liquide (CVG) grâce à un premier capteur (S1), de préférence un capteur de pression, et en déduire une première quantité de liquide,
- mesurer une deuxième pression dans la deuxième cuve de liquide (CVD) grâce à un deuxième capteur (S2), de préférence un capteur de pression, et en déduire une deuxième quantité de liquide,
- déterminer une cible d'équilibrage courante entre les quantités respectives de liquide dans les première et deuxième cuves de liquide,
- faire tourner une pompe (PP) de circulation de liquide,
- ouvrir l'un des circuits de retour (R1,R2) et fermer l'autre circuit de retour afin de faire augmenter le volume de liquide dans l'une des cuves et de faire diminuer le volume de liquide dans l'autre des cuves, afin de viser la cible d'équilibrage.

9. Procédé selon la revendication 8, dans lequel la cible d'équilibrage courante est déterminée en fonction d'une valeur d'inclinaison latérale délivrée par un capteur inclinomètre.

10. Procédé selon l'une des revendications 8 à 9, il est prévu un affichage des volumes présents dans chacune des cuves.
